# EUROPÄISCHE PATENTSCHRIFT

(11) **EP 1 431 143 B1**
(45) Veröffentlichungstag und Bekanntmachung des Hinweises auf die Patenterteilung: **19.12.2007**
(21) Anmeldenummer: 03012683.3
(22) Anmeldetag: 04.06.2003
(51) Int. Cl.: B60S 1/08

(54) **Regensensor, insbesondere für ein Kraftfahrzeug**
Rain sensor, in particular for a vehicle
Capteur de pluie, en particulier pour un véhicule

(30) Priorität: 20.12.2002 DE 10261101
(43) Veröffentlichungstag der Anmeldung: 23.06.2004
(73) Patentinhaber: ROBERT BOSCH GMBH, 70442 Stuttgart (DE)
(72) Erfinder: Bochat, Ralf, 76275 Ettlingen (DE); Glohr, Francis, 67500 Hagenau (FR); Merkel, Klaus, 76596 Forbach (DE)

(56) Entgegenhaltungen:
- EP-A- 1 258 403
- WO-A-99/47396
- DE-A1- 19 519 891
- DE-A1- 19 704 818
- DE-A1- 19 846 969
- US-A1- 2002 121 972

## Beschreibung

### Stand der Technik

Die Erfindung betrifft einen Regensensor nach Gattung des unabhängigen Anspruchs.

Es sind schon zahlreiche Regensensoren bekannt, die auf einer Scheibe eines Kraftfahrzeugs zu befestigen sind und einen Messbereich aufweisen, der auf der Scheibe im Wischbereich angeordnet ist. Problematisch ist hierbei, dass der Regensensor einerseits, im Wischbereich angeordnet sein muss, da ja gerade die Feuchtigkeit im Wischbereich als für den Fahrer relevante Größe bestimmt werden soll, andererseits der die Scheibe im Wischbereich überstreichende Wischer selbst Störungen der Messung verursacht, die in irgendeiner Weise korrigiert werden müssen. Üblicherweise wird dies mit Hilfe von Softwareverfahren gelöst, bei denen Signaleinbrüche, die durch den Wischer verursacht sind, erkannt und aus dem Messsignal eliminiert werden.

Weiterhin ist bekannt, eine zeitliche Abschätzung vorzunehmen, die ausgehend vom Start des Wischers in seiner Wendelage, bestimmte Zeitfenster aus dem Messsignal eliminieren.

Diese Verfahren sind jedoch sehr ungenau und es werden unnötig viele Messwerte eliminiert, die im Grunde eine wertvolle Information über die Feuchtigkeitsverhältnisse auf der Scheibe darstellen.

Ein gattungsgemäßer Regensensor ist aus der DE-A-197 04 818 bekannt.

### Vorteile der Erfindung

Der erfindungsgemäße Regensensor mit den Merkmalen des Hauptanspruchs hat den Vorteil, dass durch Mittel zum direkten Erkennen des Überstreichens des Wischers nur diejenigen Messwerte unberücksichtigt gelassen werden, welche unmittelbar mit dem Überstreichen der Messfläche durch den Wischer zusammenhängen. Auf diese Weise wird insbesondere auch vermieden, das bei einer vorzeitigen Blockierung des Wischers auf der Scheibe, Meßwerte eliminiert werden. Darüber hinaus ist durch direktes Erkennen des Überstreichens des Wischers auch der Einsatz in Bereichen der Scheibe möglich, die von mehreren Wischern überstrichen werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn alle wesentlichen Komponenten des Regensensors, also insbesondere die Mittel zum direkten Erkennen des Überstreichens in einem Gehäuse angeordnet sind. Dies ergibt einen kompakten Aufbau wodurch dem Regensensor keine weiteren externen Signale wie Parklagen- oder Endlagensignale zugeleitet werden müssen.

Erfindungsgemäß ist ein Umgebungslichtsensor vorgesehen, der die Beleuchtungsverhältnisse in der Umgebung des Kraftfahrzeugs detektiert und derart ausgebildet ist, dass er das Überstreichen des Wischers erkennt. Auf diese Weise werden keine weiteren Bauteile benötigt, um das Überstreichen des Wischers über den Messbereich zu erkennen. Dies vereinfacht den Regensensor und macht ihn daher überaus wirtschaftlich.

Hierbei ist es von besonderem Vorteil, wenn ein Sender vorgesehen ist, der Strahlung zur Beleuchtung des Wischers im Bereich der Messstrecke aussendet. Damit kann auch nachts oder in Tunneln, wenn der Wischer durch den Umgebungslichtsensor nicht oder nur schwach zu erkennen ist, der Überwischzeitpunkt genau bestimmt werden. Weiters wird die Genauigkeit des Regensensors dadurch weiter erhöht und das Wischverhalten verbessert.

Hierbei ist es vorteilhaft, wenn die Strahlung zur Beleuchtung des Wischers etwa senkrecht aus der Oberfläche der Scheiben austritt, um die Reflexfierungen gering zu halten und möglichst viel Strahlung aus der Scheibe auszustrahlen.

Vorteilhafterweise wird der Sender, der Strahlungen in Richtung der Scheibe zur Ausbildung des Messbereichs aussendet, auch zur Beleuchtung des Wischers verwendet, da auf diese Weise kostenintensive optoelektronische Bauelemente eingespart werden können und die Wirtschaftlichkeit des Sensor erhöht wird.

Vorteilhafterweise wird hierzu zwischen Scheibe und Sender ein Lichtleitkörper zur Strahlführung angeordnet, der typischerweise gemeinsam mit dem Lichtleitkörper des Regensensors und dem Lichtleitkörper des Umgebungslichtsensors ausgebildet ist.

Als weitere Verbessung kann ein Filtermittel vorgesehen sein, dass derart ausgebildet ist, dass zur Beleuchtung des Wischers und zur Ausbildung des Messbereichs unterschiedliche Wellenlängenbereiche verwendet sind. Auf diese Weise können sich die Strahlen zur Bildung des Messbereichs einerseits und andererseits die Strahlen zur Beleuchtung des Wischers nicht beeinflussen was die Genauigkeit des Regensensors noch weiter erhöht.

### Zeichnungen

Ein Ausführungsbeispiel der Erfindung ist in den Zeichnungen dargestellt und in der nachfolgenden Beschreibung näher erläutert. Es zeigen:
Figur 1, einen erfindungsgemäßen Regensensor in einer schematischen Querschnittsdarstellung und
Figur 2, einen erfindungsgemäßen Sensor nach Figur 1 beim Überstreichen des Meßbereichs des Regensensors durch den Wischer.

### Beschreibung des Ausführungsbeispiels

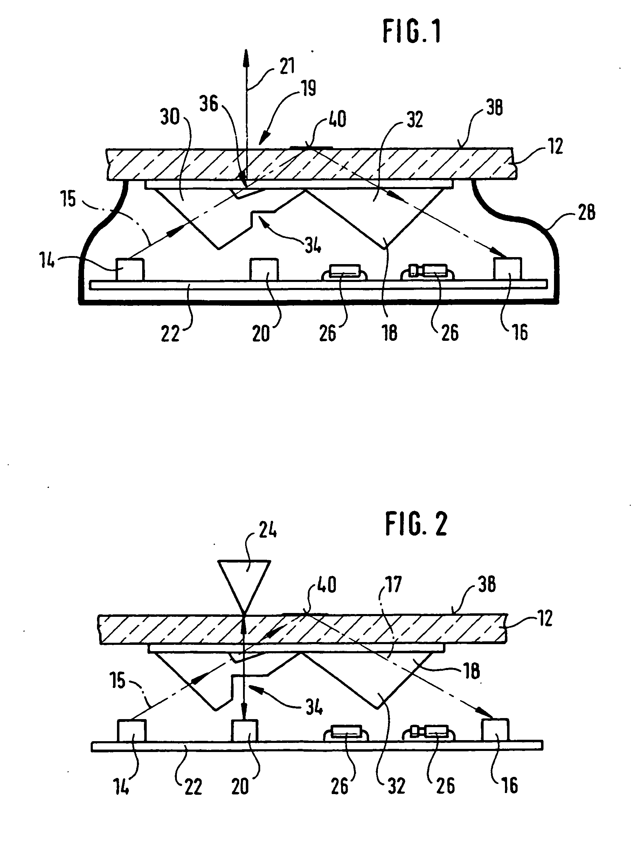

In Figur 1 ist ein erfindungsgemäßer Regensensor 10 in einer schematischen Querschnittsdarstellung gezeigt. Der Regensensor ist auf einer Scheibe 12 befestigt und umfasst im wesentlichen einen Sender 14 der Strahlung 15 in Richtung der Scheibe 12 aussendet, und einem Empfänger 16, der Strahlung 17 aus der Richtung der Scheibe empfängt. Zur Führung der Strahlung 15, 17 weist der Regensensor 10 einen Lichtleitkörper 18 auf, der mit der Scheibe 12 optisch in Verbindung steht und strahlführende Elemente, wie Linsen, aber auch Blenden oder Filter aufweisen kann. Zur Detektion von Umgebungslicht weist der Regensensor 10 weiterhin einen Umgebungslichtsensor 20 auf, der mit dem Sender 14 und den Empfänger 16 auf einer gemeinsamen Platine 22 angeordnet ist. Sender 14, Empfänger 16 und Umgebungslichtsensor 20 sind hierbei als optoelektronische in SMD-Technik ausgebildet und auf der Platine 22 befestigt. Der Umgebungslichtsensor 20 ist mit einer Steuerelektronik 26 des Regensensors 10 verbunden, und vermag neben der Umgebungshelligkeit, auch das Überstreichen eines Wischers 24 (Figur 2) zu detektieren.

Sender 14, Empfänger 16, Umgebungslichtsensor 20, Platine 22, sowie Steuerelektronik 26 sind in einem Gehäuse 28 angeordnet. Typischerweise verschießt der Lichtleitkörper 18 das Gehäuse 28 deckelartig. Zwischen Lichtleitkörper 18 und Scheibe 12 ist weiterhin ein Koppelmedium 19 angeordnet, welches Klebeeigenschaften aufweist und somit den Lichtleitkörper 18 fest an der Scheibe 12 befestigt hält.

Der Lichtleitkörper 18 umfasst im Wesentlichen ein Einkoppelprisma 30 sowie ein Auskoppelprisma 32 zur Ein- und Auskopplung der Strahlung des Senders 14. Darüber hinaus weist der Lichtleitkörper 18 noch ein weiteres lichtleitendes Element 34 auf, welches von Außen auf die Scheibe 12 einstrahlendes Umgebungslicht auf den Umgebungslichtsensor 20 treffen lässt. Zur Beleuchtung des Wischers 24 weist der Lichtleiterkörper 18 darüber hinaus noch ein Beleuchtungsprisma auf, welches einen Teil der Strahlung 15 des Senders 14 senkrecht durch die Scheibe 12 nach Außen dringen lässt wodurch ein Beleuchtungsbereich 19 gebildet wird. Der übrige Teil der Strahlung 15 des Senders 14 wird im Totalreflexionswinkel auf die Außenoberfläche 38 geleitet, und bildet dort den Messbereich 40.

In Figur 2 ist derselbe Regensensor wie in Figur 1 dargestellt, jedoch wurde aus Übersichtlichkeitsgründen das Gehäuse 28 weggelassen und dafür der Wischer 24 eingezeichnet.

Hat der Wischer 24 beim Überstreichen des Wischbereichs auf der Außenoberfläche 38 der Scheibe 12 den Messbereich 40 des Regensensors 10 überstrichen, so gerät er in den Beleuchtungsbereich 19 des Regensensors 10. In diesem Beleuchtungsbereich 19 wird die durch einen Pfeil 21 symbolisierte Beleuchtungsstrahlung vom Wischer 24 in den Umgebungslichtsensor 20 zurückgestreut. Mittels dieser Information erkennt die Steuerelektronik 26 des Regensensors 10, dass der Messbereich 40 gerade überstrichen wurde bzw., je nach Geometrie des Regensensors 10 gerade überstrichen wird.

In einer Variation der Erfindung wird durch das Beleuchtungsprisma 36 ein bestimmter Wellenlängenbereich aus der Strahlung des Senders 14 entnommen und in Richtung der Scheibe 12 zur Bildung des Beleuchtungsbereichs 19 geleitet. Vor dem Empfänger 16 und/oder im Bereich des Auskoppelprismas 32 sind ein oder mehrere Filter angeordnet, welche den Bereich der Strahlung, der durch das Beleuchtungsprisma 36 in Richtung des Wischers 24 gestrahlt wird, ausfiltern. Auf diese Weise wird eventuell auftretende Störstrahlung, die durch Streuung am Wischer 24 verursacht wird, vom Empfänger 16 nicht wahrgenommen. Dies erhöht die Qualität der Messung am Empfänger 16 und verbessert damit die Funktion des Regensensors 10.

Natürlich kann auch ein separater Empfänger zur Detektion der am Wischer 24 gestreuten Strahlung verwendet werden, anstatt des Umgebungslichtsensors 20.

## Patentansprüche

1. Regensensor (10), insbesondere für ein Kraftfahrzeug der auf einer Scheibe (12) eines Kraftfahrzeugs befestigbar ist, und einen Messbereich (40) aufweist, der auf der Scheibe (12) im Wischbereich, welcher von mindestens einem Wischer (24) überstreichbar ist, angeordnet ist, wobei Mittel (20, 32, 34, 26) zum direkten Erkennen des Überstreichens und ein Umgebungslichtsensor (20) vorgesehen sind, der die Beleuchtungsverhältnisse in der Umgebung des Kraftfahrzeugs detektiert
**dadurch gekennzeichnet, daß** der Umgebungslichtsensor (20) derart ausgebildet ist, daß er das Überstreichen erkennt.

2. Regensensor (10) nach Anspruch 1, **dadurch gekennzeichnet, dass** ein Gehäuse (28) vorgesehen ist, indem alle wesentlichen Komponenten des Regensensor (10) angeordnet sind.

3. Regensensor (10) nach Anspruch 1, **dadurch gekennzeichnet, dass** mindestens ein Sender (14) vorgesehen ist, der Strahlung zur Beleuchtung des Wischers (24) im Messbereich (40) aussendet.

4. Regensensor (10) nach Anspruch 3, **dadurch gekennzeichnet, dass** die Strahlung zur Beleuchtung etwa senkrecht aus der Außenoberfläche (39) der Scheibe (12) austritt.

5. Regensensor (10) nach Anspruch 4, **dadurch gekennzeichnet, dass** der mindestens eine Sender (14) Strahlung in Richtung der Scheibe (12) zur Ausbildung des Messbereichs (40) aussendet.

6. Regensensor (10) nach einem oder mehreren der Ansprüche 3 bis 5, **dadurch gekennzeichnet, dass** zumindest zwischen der Scheibe (12) und mindestens einem Sender (14) ein Lichtleitkörper (18) zur Strahlführung angeordnet ist.

7. Regensensor (10) nach Anspruch 5 und/oder 6, **dadurch gekennzeichnet, dass** Filtermittel derart vorgesehen sind, dass zur Beleuchtung des Wischers (24) und zur Ausbildung des Messbereichs (40) unterschiedliche Wellenlängenbereiche verwendet sind.

## Claims

1. Rain sensor (10), in particular for a motor vehicle, which can be fixed to a windscreen (12) of a motor vehicle and has a measurement region (40) which is arranged on the windscreen (12) in the wiping region which can be passed over by at least one wiper (24), with means (20, 32, 34, 26) for directly identifying the passing-over operation and an ambient-light sensor (20) being provided, which ambient-light sensor detects the illumination conditions in the surrounding area of the motor vehicle, **characterized in that** the ambient-light sensor (20) is formed in such a way that it identifies the passing-over operation.

2. Rain sensor (10) according to Claim 1, **characterized in that** a housing (28) is provided, in which housing all the essential components of the rain sensor (10) are arranged.

3. Rain sensor (10) according to Claim 1, **characterized in that** at least one transmitter (14) is provided, which transmitter emits radiation for illuminating the wiper (24) in the measurement region (40).

4. Rain sensor (10) according to Claim 3, **characterized in that** the radiation exits approximately perpendicularly from the outer surface (39) of the windscreen (12) for illumination purposes.

5. Rain sensor (10) according to Claim 4, **characterized in that** the at least one transmitter (14) emits radiation in the direction of the windscreen (12) in order to form the measurement region (40).

6. Rain sensor (10) according to one or more of Claims. 3 to 5, **characterized in that** a light guide body (18) for beam guidance is arranged at least between the windscreen (12) and at least one transmitter (14).

7. Rain sensor (10) according to Claim 5 and/or 6, **characterized in that** filter means are provided in such a way that different wavelength ranges are used to illuminate the wiper (24) and to form the measurement region (40).

## Revendications

1. Détecteur de pluie 10 notamment pour un véhicule automobile, fixé sur une vitre 12 du véhicule et comportant une plage de mesure 40 sur la vitre 12 dans la plage d'essuyage balayée par au moins un essuie-glace 24,
des moyens 20, 32, 34, 26 pour détecter directement le balayage ainsi qu'un capteur de lumière ambiante 20 pour détecter les conditions d'éclairage dans l'environnement du véhicule,
**caractérisé en ce que**
le capteur de lumière ambiante 20 est réalisé pour détecter le balayage.

2. Détecteur de pluie 10 selon la revendication 1,
**caractérisé par**
un boîtier 28 recevant tous les composants principaux du détecteur de pluie 10.

3. Détecteur de pluie 10 selon la revendication 1,
**caractérisé par**
au moins un émetteur 14 émettant le rayonnement éclairant l'essuie-glace 24 dans la plage de mesure 40.

4. Détecteur de pluie 10 selon la revendication 3,
**caractérisé en ce que**
le rayonnement d'éclairage sort sensiblement perpendiculairement de la surface extérieure 38 de la vitre 12.

5. Détecteur de pluie 10 selon la revendication 4,
**caractérisé en ce que**
l'émetteur 14 émet le rayonnement en direction de la vitre 12 pour former la plage de mesure 40.

6. Détecteur de pluie 10 selon l'une quelconque des revendications 3 à 5,
**caractérisé par**
au moins un organe guide de lumière 18 pour guider le faisceau entre au moins la vitre 12 et au moins un émetteur 14.

7. Détecteur de pluie 10 selon l'une quelconque des revendications 5 et/ou 6,
**caractérisé par**
des filtres de façon à utiliser des plages de longueurs différentes pour l'éclairage de l'essuie-glace 24 et pour établir la plage de mesure 40.
